# EUROPÄISCHE PATENTSCHRIFT

(11) **EP 0 575 385 B1**
(45) Veröffentlichungstag und Bekanntmachung des Hinweises auf die Patenterteilung: **23.11.1994**
(21) Anmeldenummer: 92905805.5
(22) Anmeldetag: 09.03.1992
(51) Int. Cl.: B30B 9/24, D21F 1/80, G01B 21/08

(54) **VERFAHREN UND VORRICHTUNG ZUR ERKENNUNG UND BESEITIGUNG VON AUFWÖLBUNGEN VON MATERIALBAHNEN**
METHOD AND DEVICE FOR THE DETECTION AND REMOVAL OF BULGES IN CONTINUOUS STRIPS OF MATERIAL
PROCEDE ET DISPOSITIF POUR LA DETECTION ET L'ELIMINATION DE BOMBEMENTS DE BANDES DE MATERIAU

(30) Priorität: 11.03.1991 AT 516/91
(43) Veröffentlichungstag der Anmeldung: 29.12.1993
(73) Patentinhaber: Andritz-Patentverwaltungs-Gesellschaft m.b.H., 8045 Graz (AT)
(72) Erfinder: SCHEUCHER, Peter, A-8062 Kumberg (AT); STUMMER, Giselherr, A-8062 Kumberg (AT)
(74) Vertreter: Collin, Hans, Dipl.-Ing. Dr.
(86) Internationale Anmeldenummer: AT9200031
(87) Internationale Veröffentlichungsnummer: WO9215448

(56) Entgegenhaltungen:
- EP-A- 0 283 870
- WO-A-86/06471
- FR-A- 2 635 272
- GB-A- 2 082 218
- US-A- 3 969 668

## Beschreibung

Die Erfindung betrifft ein Verfahren zur Erkennung und Beseitigung von Aufwölbungen von Materialbahnen vor Eintritt in Zonen höheren Druckes und eine Vorrichtung zur Durchführung dieses Verfahrens.

Bei Entwässerungsmaschinen, bei denen zwischen zwei Bändern ein Filterkuchen gebildet wird, tritt bei zu geringer Stabilität dieses Filterkuchens vor Eintritt in eine Zone höheren Druckes dieser nicht mit den Bändern in die nächste Druckzone. Dadurch bildet der Filterkuchen bzw. bilden die Filterbänder einen "Bauch", siehe z.B. FR-A-9635979. Sind die Randzonen offen, tritt der Filterkuchen, z.B. Kommunalschlamm, am Rand aus und verschmutzt so Maschine und Umgebung. Bei geschlossenen Maschinen ist dieser Bauch erst zu erkennen, wenn die Bänder stecken bleiben. Um die Maschine wieder in Gang zu bringen, muß sie daher zerlegt und gereinigt werden, was einen längeren Stillstand bedeutet. Die Verfügbarkeit der Maschine ist dadurch insbesondere bei wechselnder Kuchenstabilität sehr gering.

Ziel der Erfindung ist es, ein Verfahren zur Erkennung und Beseitigung von Aufwölbungen von Materialbahnen vor Eintritt in Druckzonen vorzuschlagen, das obige Nachteile vermeidet. Dies wird bei dem eingangs näher bezeichneten Verfahren erfindungsgemäß dadurch erreicht, daß bei Auftreten einer Aufwölbung ein Sensor ausgelenkt wird und ein Signal zur Regelung abgegeben wird. Es wird daher vor einer Preßzone bzw. bei mehreren Preßzonen vor jeder dieser Zonen durch Abtasten des oberen Bandes eine Aufwölbung durch Auslenkung eines Sensors registriert und durch dieses Signal Betriebsparameter, wie z.B. Maschinengeschwindigkeit oder Druck in einzelnen Druckzonen, geregelt und dadurch die Aufwölbung wieder beseitigt. Dadurch entfällt die Reinigung von Maschine und Umgebung bzw. bei geschlossenen Maschinen das sonst nötige Zerlegen, wodurch die Verfügbarkeit der Maschine beträchtlich gesteigert wird.

Vorteilhaft wird bei Auftreten von durch Druck bedingten Aufwölbungen der Betriebsdruck der entsprechenden Druckzone schrittweise reduziert, bis die Aufwölbung verschwunden ist. Durch diese Verfahrensweise stellt sich immer der maximal mögliche Preßdruck ein, ohne Aufwölbungen zu verursachen. Es wird somit eine Anpassung an die jeweiligen Stoffparameter des Filterkuchens erreicht.

Eine weitere Ausgestaltung des Verfahrens ist dadurch gekennzeichnet, daß bei Unterschreiten eines Grenzwertes der Druck in der in Bahnlaufrichtung vorherliegenden Zone ebenfalls reduziert wird.

Vorteilhaft ist es weiters, wenn bei Unterschreiten eines Druckgrenzwertes der vorherliegenden Druckzone der Druck in den weiter voranliegenden Druckzonen entsprechend reduziert wird, wobei der Druck in den einzelnen Druckzonen in Bahnlaufrichtung jeweils gleich groß oder größer als in der voranliegenden Zone ist. Dadurch paßt sich auch der Differenzdruck zwischen den einzelnen Preßzonen selbsttätig an verschiedene Verhältnisse des Filterkuchens an und es ist somit ein maximaler Trockengehalt (maximale Entwässerung) des Filterkuchens unter Beibehaltung der Betriebssicherheit möglich.

Weiters ist es zweckmäßig, wenn nach Ablauf einer Wartezeit nach Verschwinden der Aufwölbung der Druck in der entsprechenden Zone wieder erhöht wird. Dadurch stellt sich in jeder Zone der maximale Druck ein, der gerade noch nicht zu einer Aufwölbung führt.

Gegenstand der Erfindung ist auch eine Vorrichtung zur Durchführung des erfindungsgemäßen Verfahrens zur Erkennung und Beseitigung von Aufwölbungen von Materialbahnen vor Eintritt in Druckzonen, die dadurch gekennzeichnet ist, daß ein vorzugsweise druckdichter Sensor vorgesehen ist, der bei einer Aufwölbung der Materialbahn auslenkbar und nach Verschwinden der Aufwölbung wieder zurückstellbar ist. Durch eine derartige Ausgestaltung ist zu jedem Zeitpunkt eine Aussage über das Vorhandensein einer Aufwölbung der Materialbann möglich.

Eine vorteilhafte Ausgestaltung der erfindungsgemäßen Vorrichtung ist dadurch gekennzeichnet, daß der Sensor aus einem Näherungsschalter und einer sich bei Auslenkung eines kippbaren Fühlers des Sensors bewegenden Scheibe besteht.

Günstig ist es, wenn die Scheibe mittels einer Feder in Richtung Näherungsschalter gedrückt wird. Es ist somit immer eine definierte Lage der Scheibe in der Normalstellung gegeben, die erst bei Überschreitung einer entsprechenden Stellkraft, die durch das Auslenken des Sensors erzeugt wird, verändert wird und einen entsprechenden Impuls des Näherungsschalters erzeugt.

Besonders vorteilhaft ist es, wenn die Scheibe mit einer Schnur bzw. einem Seil bzw. Draht verbunden ist, die bzw. das bzw. der an einem Stift im Kippfühler befestigt ist. Durch diese Ausführung des Sensors läßt sich dieser einfach herstellen, wobei immer die Funktion gewährleistet ist, da die Verbindung der Scheibe mit dem Kippfühler durch z.B. eine Schnur nur auf Zug beansprucht wird.

Eine weitere erfindungsgemäße Ausgestaltung der Vorrichtung ist dadurch gekennzeichnet, daß der Sensor druckdicht eingebaut ist. Eine derartige Ausführung ermöglicht gegenüber bisher bekannten Sensoren eine sichere Betriebsweise der Maschine.

Eine vorteilhafte Weiterbildung der erfindungsgemäßen Vorrichtung ist dadurch gekennzeichnet, daß der Sensor mit einer freiprogrammierbaren Steuerung verbunden ist.

Eine weitere Ausgestaltung ist dadurch gekennzeichnet, daß die freiprogrammierbare Steuerung mit Druckreglern für die einzelnen Druckzonen in Verbindung steht. Durch diese Ausführung der Vorrichtung läßt sich das erfindungsgemäße Verfahren, insbesondere die Regelung der Maschine, in einfacher Weise durchführen.

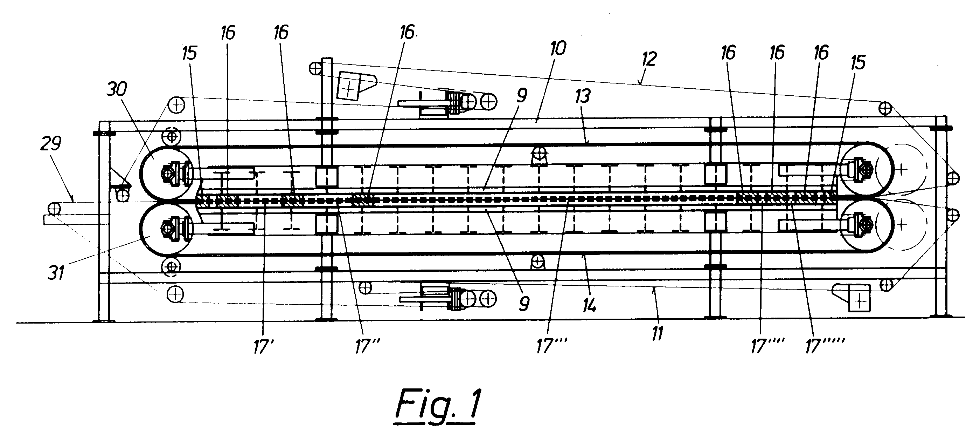

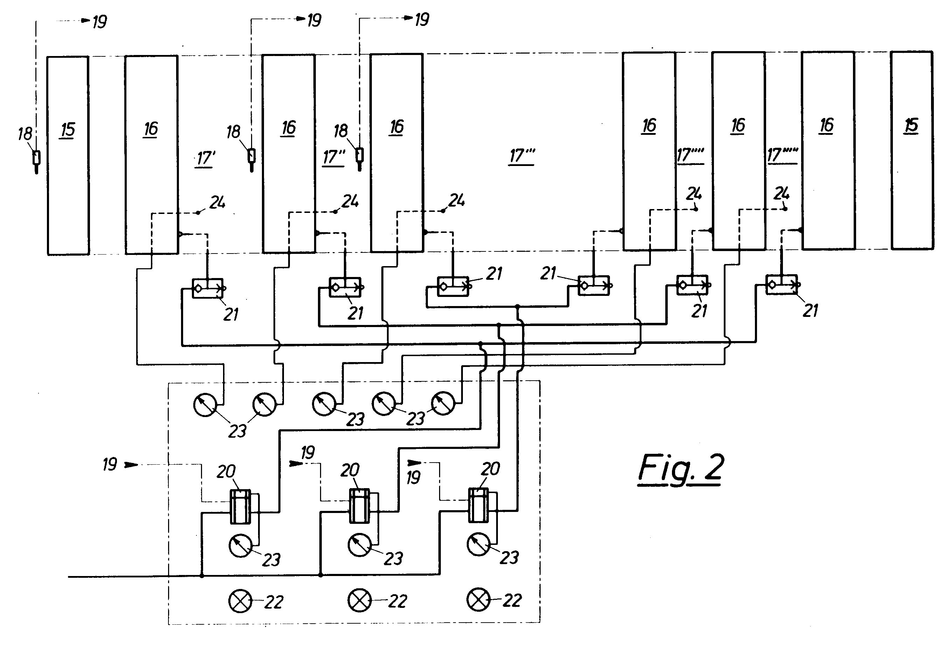

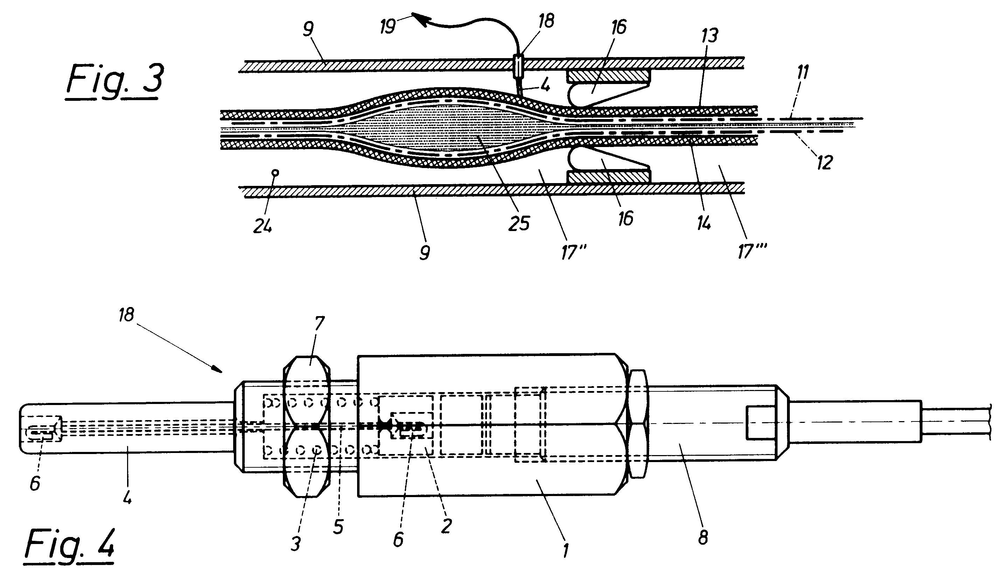

Die Erfindung wird nun anhand eines Ausführungsbeispiels unter Bezugnahme auf die Zeichnungen näher erläutert. In diesen zeigen: Fig. 1 einen Längsschnitt durch eine Hochdruckentwässerungsmaschine, Fig. 2 das Regelschema der Anlage, Fig. 3 einen Ausschnitt aus Fig. 1 mit eingebautem Sensor und einer Aufwölbung der Bänder und Fig. 4 den erfindungsgemäßen Sensor.

Fig. 1 zeigt eine Hochdruckentwässerungsmaschine zur Entwässerung von Stoffsuspensionen. Das Gut wird bei 29 auf ein Untersieb 11 aufgebracht, mit einem Obersieb 12 abgedeckt und anschließend zwischen ein oberes Gurtband 13 und ein unteres Gurtband 14 bei den Umlenkwalzen 30 und 31 eingebracht. Die gesamte Vorrichtung ist in einem Gestell 10 untergebracht. Die Entwässerung des Materials wird durch Aufbringung von Druck in verschiedenen Druckstufen erzielt. Mit 9 ist der obere und untere Rahmen des Arbeitsbereiches bezeichnet. Die Abdichtung des gesamten Druckbereiches erfolgt durch jeweils eine Sekundärdichtung 15 am Einlaß bzw. Auslaß des Materials. Die Trennung der einzelnen Druckbereiche erfolgt mittels Druckkästen 16. Die Druckbereiche 17',17'',17''' weisen dabei einen ansteigenden Druck, die darauf folgenden Druckbereiche 17'''',17''''' entsprechend reduzierten Druck auf. Der Maximaldruck tritt im Druckbereich 17''' auf und dort findet auch der Hauptanteil der Entwässerung statt.

Fig. 2 zeigt eine schematische Darstellung des Aufbaues einer Maschine, bei der die Erfindung angewendet wird und zeigt auch den Aufbau der Regelkreise. Die Sekundärdichtungen sind hier wiederum mit 15 und die Druckkästen zur Trennung der einzelnen Druckbereiche mit 16 bezeichnet. Die einzelnen Druckbereiche wurden in Übereinstimmung mit Fig. 1 mit 17',17'',17''',17'''',17''''' bezeichnet. Vor den einzelnen Druckkästen 16 sind beispielhaft die erfindungsgemäß vorgesehenen Sensoren bzw. Kipptaster 18 dargestellt, die mit einer freiprogrammierbaren Steuerung 19 verbunden sind. Die Signale der Kipptaster 18 wirken über die freiprogrammierbare Steuerung 19 auf ein entsprechendes Druckregelventil 20, welches wiederum ein Schnellentlüftungsventil 21 betätigt. In den einzelnen Druckbereichen 17',17'',17''',17'''',17''''' angeordnete Druckfühler 24 geben dabei den aktuellen Wert an ein entsprechendes Manometer 23 auf der Schalttafel.

Bei Auftreten einer Aufwölbung wird nun der entsprechende Kipptaster 18 ausgelenkt und gibt ein Signal an die freiprogrammierbare Steuerung 19 sowie eine entsprechende Kontrolleuchte 22.

Die Regelung kann nun grundsätzlich auf zwei verschiedene Arten erfolgen:
1. Wird eine Aufwölbung registriert, reduziert die Regelung alle Drücke auf den Minimalwert der jeweiligen Zone. Dieser Druck bleibt solange bestehen, bis die Aufwölbungsmeldung wieder verschwindet. Anschließend wird der Druck der Zone, in der die Aufwölbung aufgetreten ist, um einen Absenkbetrag reduziert. Tritt nun während einer voreingestellten Wartezeit keine neue Aufwölbung auf, wird der Druck in der Zone um den vorher abgesenkten Betrag wieder erhöht. Falls doch vor Ablauf der Wartezeit wieder eine Aufwölbung entsteht, wird Der Druck abermals um einen Absenkbetrag reduziert und die Wartezeit beginnt von neuem. Dadurch stellt sich in jeder Zone der maximale Druck ein, der gerade noch zu keiner Aufwölbung führt.
2. Bei Auftreten einer Aufwölbung wird der Druck der entsprechenden Zone jeweils schrittweise reduziert, bis die Aufwölbung verschwindet. Sollte dabei der Druck der in Laufrichtung der Bahn voranliegenden Zone erreicht werden, wird auch dieser schrittweise reduziert. Dabei ist die Bedingung einzuhalten, daß der Druck der einzelnen Zonen in Bahnlaufrichtung bis zur Hauptentwässerungszone zunehmen, mindestens aber dem Druck in der voranliegenden Zone entsprechen muß.

Die Funktionsweise wird nun anhand der Fig. 3 erläutert, wobei hier beispielhaft das Auftreten einer Aufwölbung im Druckbereich 17'' dargestellt ist. Die Trennung vom Druckbereich 17''' erfolgt mittels dem als Dichtung wirkenden Druckkasten 16. Es sind hier der obere und untere Rahmen des Arbeitsbereiches 9 dargestellt. Mit 11 ist das Obersieb, mit 12 das Untersieb bezeichnet, zwischen denen sich das zu entwässernde Filtergut 25 befindet. Die Abdeckung der Siebe 11,12 erfolgt durch den Obergurt 13 und den Untergurt 14. Die Aufbringung des Preßdruckes zur Entwässerung erfolgt hier mittels Druckwasser 24 auf die Gurte 13,14. Bei Auftreten einer Aufwölbung wird nun der Fühler 4 des Sensors (Kippschalters) 18 ausgelenkt. Durch das an die Steuerung 19 abgegebene Signal wird dann der Druck der einzelnen Druckbereiche bzw. Druckzonen entsprechend geregelt, so daß sich der maximale Druck und somit die maximale Entwässerungsleistung ohne Aufwölbung (Bauchbildung) bei den gegebenen Eigenschaften des Filterkuchens 25 ergibt.

Der bei der Erfindung zur Anwendung gelangende Sensor oder Kippschalter 18 ist nun in Fig. 4 im Detail dargestellt. Er besteht aus einer Hülse 1, in die ein induktiver Näherungsschalter 8 eingeschraubt und mittels Kontramuttor (in Fig.4 nicht bezeichnet) hinsichtlich seines Abstandes zu einer Scheibe 2, die sich auf der anderen Seite der Hülse 1 befindet, fixiert ist. Die Scheibe 2 wird mittels einer Feder 3 in Richtung des Näherungsschalters 8 gedrückt. Die Einstellung der Lage des Fühlers 4 relativ zum Rahmen 9 erfolgt mittels einer Mutter 7. Der Fühler 4 des Sensors 18 wird mittels eines Drahtes 5, der an den Stiften 6 befestigt ist, mit der Scheibe 2 verbunden. Erfolgt nun eine Auslenkung des Fühlers 4, so wird der Draht 5 angezogen und damit die Scheibe 2 vom Näherungsschalter 8 entfernt. Dies löst dann ein Signal aus, worauf die Regelung anspricht.

Die Erfindung kann nicht nur bei Hochdruckentwässerungsmaschinen eingesetzt werden, sondern auch bei jeder anderen Anlage, bei der Bahnen unterschiedlichen Drücken ausgesetzt sind und Aufwölbungen entstehen können. Insbesondere ist eine Anwendung vor Preßwalzen möglich.

## Patentansprüche

1. Verfahren zur Erkennung und Beseitigung von Aufwölbungen von Materialbahnen vor Eintritt in Zonen höheren Druckes, dadurch gekennzeichnet, daß bei Auftreten einer Aufwölbung ein Sensor (18) ausgelenkt wird und ein Signal zur Regelung gegeben wird.

2. Verfahren nach Anspruch 1, dadurch gekennzeichnet, daß bei durch Druck bedingten Aufwölbungen der Betriebsdruck der entsprechenden Druckzone schrittweise reduziert wird, bis die Aufwölbung verschwunden ist.

3. Verfahren nach Anspruch 2, dadurch gekennzeichnet, daß bei Unterschreiten eines Grenzwertes der Druck in der in Bahnlaufrichtung vorherliegenden Druckzone ebenfalls reduziert wird.

4. Verfahren nach Anspruch 3, dadurch gekennzeichnet, daß bei Unterschreiten eines Druckgrenzwertes der vorherliegenden Druckzone der Druck in den weiter voranliegenden Druckzonen entsprechend reduziert wird, wobei der Druck der einzelnen Druckzonen in Bahnlaufrichtung jeweils gleich groß oder größer als in der vorhergehenden Zone ist.

5. Verfahren nach einem der Ansprüche 2 bis 4, dadurch gekennzeichnet, daß nach Ablauf einer Wartezeit nach Verschwinden der Aufwölbung der Druck in der entsprechenden Zone wieder erhöht wird.

6. Vorrichtung zur Durchführung des Verfahrens nach einem der Ansprüche 1 bis 5, dadurch gekennzeichnet, daß ein vorzugsweise druckdichter Sensor (18) vorgesehen ist, der bei einer Aufwölbung der Materialbahn (25) auslenkbar und nach Verschwinden der Aufwölbung wieder zurückstellbar ist.

7. Vorrichtung nach Anspruch 6, dadurch gekennzeichnet, daß der Sensor (18) aus einem Näherungsschalter (8) und einer sich bei Auslenkung eines kippbaren Fühlers (4) des Sensors (18) bewegenden Scheibe (2) besteht.

8. Vorrichtung nach Anspruch 7, dadurch gekennzeichnet, daß die Scheibe (2) mittels einer Feder (3) in Richtung Näherungsschalter (8) gedrückt ist.

9. Vorrichtung nach einem der Ansprüche 7 oder 8, dadurch gekennzeichnet, daß die Scheibe (2) mit einer Schnur bzw. einem Seil bzw. Draht (5) verbunden ist, die bzw. das bzw. der an einem Stift (6) im Kippfühler (4) befestigt ist.

10. Vorrichtung nach einem der Ansprüche 6 bis 9, dadurch gekennzeichnet, daß der Sensor (18) druckdicht eingebaut ist.

11. Vorrichtung nach einem der Ansprüche 6 bis 10, dadurch gekennzeichnet, daß der Sensor (18) mit einer freiprogrammierbaren Steuerung (19) verbunden ist.

12. Vorrichtung nach Anspruch 11, dadurch gekennzeichnet, daß die freiprogrammierbare Steuerung (19) mit Druckreglern (20,21) für die einzelnen Druckbereiche bzw. Druckzonen (17', 17'', 17''', 17'''', 17''''') in Verbindung steht.

## Claims

1. A method for the detection and removal of bulges in continuous strips of material before they enter zones of higher pressure, characterized in that upon occurrence of a bulge, a sensor (18) is deflected and a control signal is generated.

2. The method according to claim 1, wherein upon occurrence of bulges caused by pressure, the operating pressure of the respective pressure zone is reduced step by step until the bulge has disappeared.

3. The method according to claim 2, wherein upon falling short of a limiting value, the pressure in the pressure zone upstream in strip advancing direction is also reduced.

4. The method according to claim 3, wherein on falling short of a pressure limiting value of the pressure zone located upstream, the pressure in the pressure zones located further upstream is correspondingly reduced, the pressure in the individual pressure zones in strip advancing direction each being equal to or higher than that in the zone located upstream.

5. The method according to any one of the claims 2 to 4, wherein the pressure in the respective zone is increased after expiration of a waiting period following the disappearance of the bulge.

6. A device for carrying out the method according to any one of the claims 1 to 5, characterized in that a preferably pressure-tight sensor (18) deflectable upon occurrence of a bulge in the strip of material (25) and retractable following the disappearance of the bulge is provided.

7. The device according to claim 6, wherein the sensor (18) consists of a proximity switch (8) and a disk (2) moving on deflection of a pivotal detecting element (4) of the sensor (18).

8. The device according to claim 7, wherein the disk (2) is biassed in the direction of the proximity switch (8) by means of a spring (3).

9. The device according to claim 7 or 8, wherein the disk (2) is connected to a cord, rope or wire (5) attached to a pin (6) in the pivotal detecting element (4).

10. The device acording to any one of the claims 6 to 9, wherein the sensor (18) is installed pressure-tight.

11. The device according to any one of the claims 6 to 10, wherein the sensor (18) is connected to a freely programmable control (19).

12. The device according to claim 11, wherein the freely programmable control (19) is connected to pressure regulators (20, 21) for the individual pressure areas or pressure zones (17', 17'', 17''', 17'''', 17''''').

## Revendications

1. Procédé pour la détection et l'élimination de bombements de bandes de matériau avant leur entrée dans des zones à pression élevée, caracterisé en ce qu'un détecteur (18) est dévié et un signal de réglage est généré en cas de bombements.

2. Procédé selon la revendication 1, caractérisé en ce que la pression de service de la zone de pression respective est réduite progressivement en cas de bombements causés par la pression, jusqu'à ce que le bombement disparaisse.

3. Procédé selon la revendication 2, caractérisé en ce que la pression au sein de la zone de pression se trouvant en amont en direction d'avancement de bandes est également réduite lorsqu'une valeur limite n'est pas atteinte.

4. Procédé selon la revendication 3, caractérisé en ce que la pression au sein des zones de pression se trouvant plus en amont est réduite lorsque la valeur limite de pression de la zone de pression se trouvant en amont n'est pas atteinte, la pression présente dans les zones de pressions individuelles en direction d'avancement de bandes étant, respectivement, aussi importante ou plus importante que dans la zone se trouvant en amont.

5. Procédé selon une des revendications 2 à 4, caractérisé en ce que la pression au sein des zones respectives est augmentée après l'expiration d'une période d'attente et après la disparition du bombement.

6. Dispositif pour effectuer le procédé selon une des revendications 1 à 5, disposant d'un détecteur préférablement étanche (18) qui peut être dévié en cas de bombement se produisant dans la bande de matériau (25) et retiré après la disparition du bombement.

7. Dispositif selon la revendication 6, caractérisé en ce que le détecteur (18) consiste d'un détecteur de proximité (8) et d'un disque (2) se mouvant lorsque le capteur basculant (4) du détecteur (8) est dévié.

8. Dispositif selon la revendication 7, caractérisé en ce que le disque (2) est pressé en direction du détecteur de proximité (8) par un ressort (3).

9. Dispositif selon une des revendications 7 ou 8, caractérisé en ce que le disque (2) est joint à un cordon, d'un câble ou d'un fil attaché à une cheville (6) au sein du capteur basculant (4).

10. Dispositif selon une des revendications 6 à 9, caractérisé en ce que le détecteur (18) est installé d'une façon étanche.

11. Dispositif selon une des revendications 6 à 10, caractérisé en ce que le détecteur (18) est joint à un réglage programmable librement (19).

12. Dispositif selon la revendication 11, caractérisé en ce que le réglage programmable librement (19) est joint aux régulateurs de pression (20, 21) pour les domaines ou zones de pression individuels (17', 17'', 17''', 17'''',17''''').
